# EUROPEAN PATENT SPECIFICATION

(11) **EP 0 895 507 B1**
(45) Date of publication and mention of the grant of the patent: **31.05.2000**
(21) Application number: 97904674.5
(22) Date of filing: 06.02.1997
(51) Int. Cl.: C01B 13/00

(54) **DEVICE FOR PRODUCING A SINGLET OXYGEN ACTIVATED GAS STREAM**
VORRICHTUNG ZUR HERSTELLUNG EINES MIT SINGULETTSAUERSTOFF-AKTIVIERTEN GASSTROMS
PROCEDE DE PRODUCTION D'UN COURANT GAZEUX ACTIVE PAR L'OXYGENE SINGULET

(30) Priority: 07.02.1996 NO 960494
(43) Date of publication of application: 10.02.1999
(73) Proprietor: Singlet Oxygen Technologies AS, 1360 Nesbru (NO)
(72) Inventor: VAN DER VALK, Tony, S-411 28 Göteborg (SE); KLEMM, Jörg, D-47799 Krefeld (DE)
(74) Representative: Hynell, Magnus
(86) International application number: NO9700037
(87) International publication number: WO9729044

(56) References cited:
- US-A- 4 162 207
- US-A- 4 579 837
- US-A- 4 915 804

## Description

The invention concerns a device for providing a singlet oxygen-activated oxygenous gas flow, which device comprises a light-sensitive material provided in an activating chamber comprising a gas inlet and a gas outlet for the formation of singlet oxygen in the gas while it is located in the chamber.

Singlet oxygen has been the subject of extensive research since around 1930, but particularly during the last 25 years, thus making it a well-studied and documented field. The actual mechanism involved in the formation and reduction of singlet oxygen is well known and has been described and discussed in much detail. Amongst other things it has been found that singlet oxygen, as a non-stable state of oxygen, has a variable, but short lifetime. Under atmospheric conditions singlet oxygen will have a lifetime of the order of milliseconds. In liquid solution the lifetime is substantially shorter.

It has been found that singlet oxygen is directly biologically active, and a major part of the research is concerned with effects of singlet oxygen in contact with various media, both organic and inorganic.

Even though singlet oxygen quickly returns to oxygen in its ground state, by studying the effects of the described device, it can be demonstrated that a medium, liquid or gas, in which singlet oxygen has been formed, has a certain altered state, at least for a limited period, which is described hereinafter as an activated state. This state must not be confused with the first descriptions (in the 1930's) of singlet oxygen where singlet oxygen is described as activated oxygen.

Known equipment exists for the production of singlet oxygen and photo-sensitive means for this purpose.

In "Singlet O₂" by Aryeh A. Frimer, CRC Press Inc., USA 1985, the principles are described for production of singlet oxygen in a gaseous state, and thereby activated gas.

WO patent application 9007144 indicates various photo-sensitive means for, in combination with light radiation, forming singlet oxygen which is employed for oxidation of specific compounds.

WO patent application 9100241 concerns decomposition of nitrogen oxides. The decomposition is performed by the influence of light on a catalyst when a radiation source is placed against a transparent wall of a container.

US Patent 4 915 804 discloses various means for applying light-sensitive material to beads or light-penetrable supports. The light-sensitive material may also be present in a liquid carrier (US Patent 4 162 207).

DE patent 4125284 describes a device for producing activated oxygen. The device which is described consists of a chamber in which through-flowing oxygen is irradiated from a UV radiation source and the chamber is divided by partitions into forward and backward flow paths, thus obtaining the longest possible flow path in order to achieve the longest possible treatment time for the oxygen. There is further described a finishing treatment with magnetic influence of the end product. However, the device is not intended for generating singlet oxygen, but for so-called "softer activation of the oxygen".

DE patent 3606925 describes a device for producing singlet oxygen and possibly ozone. The device is tubular, with a lamp in the middle and with a through-flow of oxygen, where a layer of metal oxides or a fluoridating material is provided on the surfaces of the device. The design of the device is extremely complicated.

The known devices which have been employed for production of singlet oxygen have been large and cumbersome and/or complicated or it has not been possible to document that the production of singlet oxygen has actually taken place. Applications of singlet oxygen-activated gas have therefore been limited in use.

The object of the present invention is to provide a device whereby it will be possible to produce singlet oxygen efficiently and in a simple manner, preferably without the need for large amounts of apparatus and where such activated gas can be employed, for example, for therapeutic treatment of human complaints as well as for the enrichment of, for example, water which is used for the cultivation of plants, fish farming, etc.

A light and simple device of this kind should be easily transportable and capable of being operated by simple means.

This object is achieved with a device as described in the introduction which is characterized in that the activating chamber is designed as a compartment between two plates, one of which is light-penetrable, while a photosensitive material is applied on the other plate in the bottom area of the compartment as the light-sensitive material, the compartment being sealed against the environment by means of a sealing ring interposed between the plates. Further features of the invention are given in the subclaims 2-8.

By means of the invention singlet oxygen is provided by irradiating a gas flow, which is preferably air or oxygen gas which flows through a low chamber, thus forming a relatively thin layer of air, e.g. with a height of 3 millimetres. The chamber preferably has a height between 1 and 30 mm, but the most efficient production of singlet oxygen will be obtained in a chamber with a height of 1-3 mm at a given flow rate. If the chamber is too high the light intensity will decrease and the proportion of the gas which comes into contact with the photo-sensitive material will be smaller. An advantageous gas through-flow rate is 3-5 l/min. with a chamber height between 1 and 6 mm, since the total air volume in the chamber will thereby be replaced several times per second, preferably 5-15 times per second. In the bottom of the chamber there is applied a layer of photo-sensitive material and this layer is irradiated from the outside of the chamber from a light source which may be an artificial light source or natural light. The use of a halogen lamp which emits a strong light is preferred. When the photo-sensitive material is irradiated through a layer of through-flowing gas, singlet oxygen will briefly be formed in the oxygenous gas. Even before the gas leaves the chamber, or immediately afterwards, the singlet oxygen has again returned to oxygen in its ground state, but the gas which flows out will be a thereby activated gas. The only driving means for the device is the radiation source, e.g. a halogen lamp and a driving device for the gas flow, e.g. a pump. Alternatively, instead of a halogen lamp another radiation source can be employed, in which case a photo-sensitive material intended for this type of light must also be used. As a driving source, solar cells, e.g., can be employed for operation of the pump by means of sunlight as the radiation source or a solar cell system can also operate a radiation source. Thus the device can be employed in a very general way.

The invention will now be explained in more detail by means of an embodiment which is illustrated in the drawing, in which:
- fig. 1: the device according to the invention viewed in a side section,
- fig. 2: the device according to the invention viewed from above with the radiation source removed,
- figs. 3-6: a further embodiment illustrating a variant of the device, where fig. 3 illustrates the device's upper part, viewed from above, fig. 4 a photo-sensitive layer, fig. 5 the lower part of the device viewed from above and fig. 6 a section of the assembled device.

The device according to the invention is constructed on the basis, e.g., of a metal plate 1, which, e.g., may be rectangular, on which there is placed a ring 2, e.g. of silicon rubber, which, e.g., may have a height of 3 millimetres. Over the centre hole of the ring 2 there is mounted a glass plate 4 which closes this cavity, thereby forming an activating chamber 3. In the illustrated example there is mounted on this plate 4 a halogen lamp with a glass cover which eliminates a certain portion of the radiation, thus achieving a radiation within a specific frequency pattern. The glass plate 4 can be an integrated part of the halogen lamp. In the bottom of the activating chamber 3 there is applied a layer or coating of photo-sensitive material, indicated by 6. In the metal basic part 1 there may be provided intake connection pieces for gas, preferably air, indicated by 7 and outlet connection pieces 8 for discharge of gas from the chamber 3. To these connection pieces 7 and 8 there can be connected hoses, since the inlet 7 can be connected to a pump which causes gas to flow through the activating chamber.

During operation of the device the halogen lamp is switched on, the pump is activated, thus causing, e.g., air to flow in through the opening 7, through the activating chamber 3 in a thin layer which is irradiated by the radiation from the halogen lamp 5 which illuminates the photo-sensitive material 6 in the bottom of the chamber. This radiation on to the photo-sensitive layer causes the formation of singlet oxygen which after a very short time returns to oxygen in its ground state and subsequently flows out through the outlet 8, through a hose to the treatment location. This air may, e.g., be caused to flow through water, whereupon the water will receive activated properties. The gas can, however, also be used directly as an active means of treatment, e.g. for inhalation in the treatment of allergy, asthma and other diseases.

The photo-sensitive material can be manufactured on the basis of a microporous surface, to which are applied chromophore particles by means of kinetic, thermal or chemical methods. The surface with the coating of chromophore crystals is sensitive to light in a specific frequency range and will emit its energy to the adjacent oxygen molecules or atoms. The microporous surface may consist of a ceramic material or metal. Methylene-blue, rose bengal, porphyrines, fluorescein, etc. can be employed as chromophores. In connection with a halogen lamp methylene blue can be used as a photo-sensitive material.

The halogen lamp 5 can also be replaced by other radiation sources. Radiation sources must be employed which have a ray frequency which affects the chosen photo-sensitive material. It will also be possible to use direct sunlight radiation, and the size of the opening or the glass plate, i.e. the aperture of the active chamber can also be regulated depending on both through-flow, thickness of the gas layer in the active chamber and the photo-sensitive material.

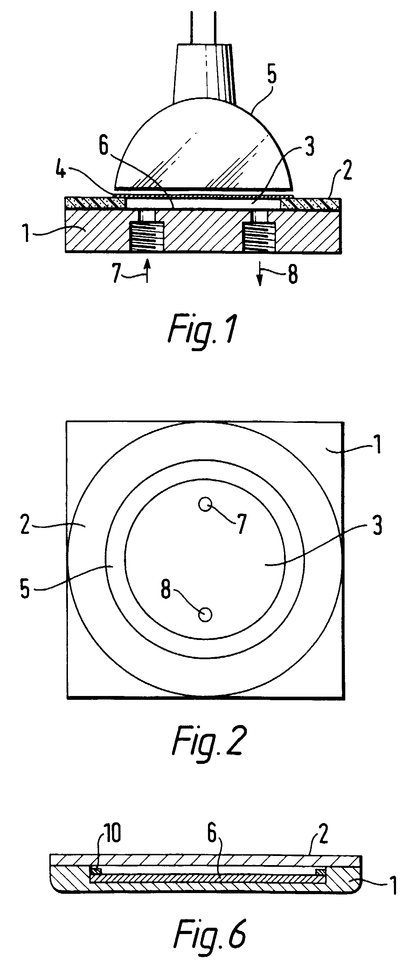

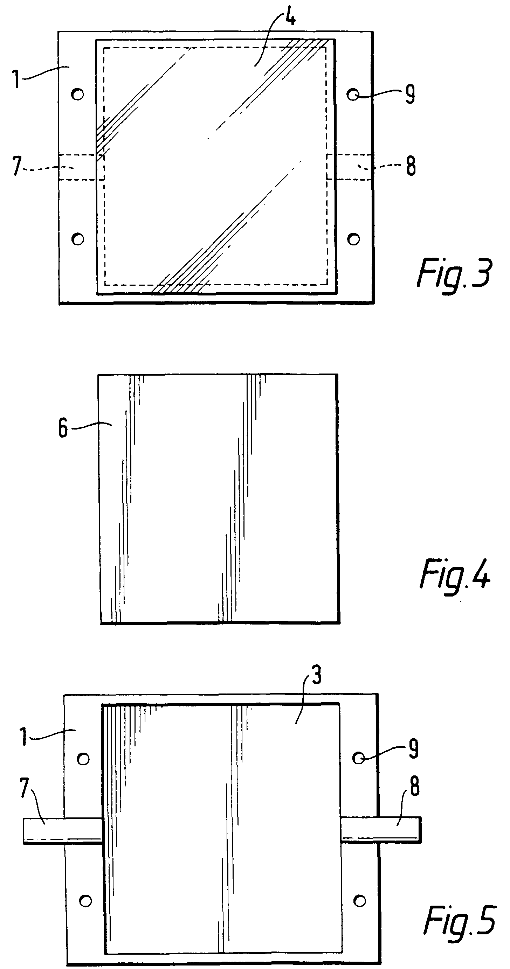

Fig. 3 illustrates a second embodiment of the device according to the invention. The figures show the individual elements of which the device is composed. Figure 3 illustrates the upper part or the cover 2 of the device. The cover is given the same reference numeral as the upper ring on figure 1, even though there are clear structural differences. The cover 2 may be made entirely of a light-penetrable material such as polycarbonate or glass or it can have a window 3 of such a material, as indicated in fig. 3. It is indicated with dotted lines that on the bottom of the cover there can be cut-outs for the inlet 7 and the outlet 8, but these can also be provided in the lower part, as illustrated in fig. 5. A hole 9 for joining the upper part and the lower part is provided in the edge area.

Fig. 4 illustrates a photo-sensitive layer 6, which can be placed on a carrier or a film, or which can be applied directly to the bottom of the activating chamber.

Fig. 5 illustrates the lower part 1 of the chamber. This part has a compartment 3 in the middle, which will form the activating chamber. In this chamber is disposed the photo-sensitive material 6, which preferably has the same surface area as the activating chamber, whereupon the upper part 2 and lower part 1 are joined, e.g. screwed together.

The device which is illustrated in section in fig. 6 is thereby produced. In this figure there is no indication whether the upper part 2 or the cover is equipped with a window or is made entirely of glass or a similar material, nor are the inlet or outlet channels indicated, since many variations are possible here depending on choice of material and the like. In fig. 6 there is also illustrated a packing or seal 10.

Singlet oxygen is produced from oxygen in a gaseous state as long as the gas passes through the chamber and the light source is active. The production is constant and long-lasting insofar as the state of the gas is constant and factors such as pressure, temperature and light intensity are constant. The formation of singlet oxygen takes place under approximately atmospheric conditions, with the use of a relatively low flow rate. The photo-sensitive material is composed of a stable, non-reactive material which, when irradiated with a sufficient light intensity, has the properties which ensure that it achieves a photo-sensitization of oxygen. The light source is selected on the basis of the material which is used, such as for example methylene blue or rose bengal. The amount of gas produced, and possibly the activation state, can be varied by altering the light intensity or the surface size of the sensitive material as well as the height of the chamber.

In connection with the example in fig. 1 an air through-flow of 3-5 litres per minute was employed. This is viewed in relation to the fact that the volume in the chamber is in the order of 5-10 cm³. The activating chamber is sealed in order to prevent leakage air from flowing in. When strong light sources are employed it can be necessary to use cooling.

The device according to the invention can be modified in many different ways. As mentioned above, it is possible to employ different types of radiation sources, the shape of the chamber may also differ from the circular or square shapes illustrated in the figures and other kinds of air through-flow can be used. The device may also advantageously be designed as a portable unit or be mounted in such a unit.

## Claims

1. A device for providing a singlet oxygen-activated oxygenous gas flow, which device comprises a light-sensitive material (6) provided in an activating chamber (3) comprising a gas inlet (7) and a gas outlet (8) for the formation of singlet oxygen in the gas while it is located in the chamber (3),
characterized in that the activating chamber (3) is designed as a compartment between two plates (1,4), one of which (4) is light-penetrable, while a photosensitive material is applied on the other plate (1) in the bottom area of the compartment as the light-sensitive material (6), the compartment being sealed against the environment by means of a sealing ring (2) interposed between the plates (1,4).

2. A device according to claim 1,
characterized in that the chamber has a height which is low in relation to the area of the photo-sensitive material (6), especially between 1 and 30 mm, preferably between 1 and 3 mm.

3. A device according to claim 2,
characterized in that the gas through-flow at a chamber (3) height of between 1 and 6 mm is maintained at a rate of between 3 and 5 l/min.

4. A device according to claim 1,
characterized in that the light source (5) is sunlight, or a halogen lamp or another radiation source with a defined radiation spectrum.

5. A device according to claim 1,
characterized in that it is designed as a portable unit.

6. A device according to claim 1,
characterized in that the photo-sensitive material consists of a microporous surface with kinetically, thermally or chemically applied chromophore particles.

7. A device according to claim 6,
characterized in that the microporous surface is made of a ceramic material or of metal.

8. A device according to claim 1,
characterized in that the compartment is composed of a cavity in the lower plate (1).

## Patentansprüche

1. Vorrichtung zum Erzeugen eines mit Singlet-Sauerstoff aktivierten sauerstoffhaltigen Gasstroms, wobei die Vorrichtung ein lichtempfindliches Material (6) umfasst, das in einer Aktivierungskammer (3) vorhanden ist, die einen Gaseinlass (7) und einen Gasauslass (8) umfasst, um Singlet-Sauerstoff in dem Gas zu bilden, wenn es sich in der Kammer (3) befindet, **dadurch gekennzeichnet**, dass die Aktivierungskammer (3) als Zelle zwischen zwei Platten (1, 4) ausgeführt ist, von denen eine (4) lichtdurchlässig ist, während auf die andere Platte (1) im unteren Bereich der Kammer ein photoempfindliches Material als das lichtempfindliche Material (6) aufgetragen ist, och wobei die Zelle gegenüber der Umgebung mit einem Dichtungsring (2) abgeschlossen ist, der sich zwischen den Platten (1, 4) befindet.

2. Vorrichtung nach Anspruch 1, **dadurch gekennzeichnet,** dass die Kammer eine Höhe aufweist, die in Bezug auf die Fläche des photoempfindlichen Materials (6) gering ist, d.h. zwischen 1 und 30 mm, vorzugsweise zwishen 1 und 3 mm, liegt.

3. Vorrichtung nach Anspruch 2, **dadurch gekennzeichnet**, dass der Gasstrom bei einer Höhe der Kammer (3) zwischen 1 und 6 mm auf einer Menge von 3 bis 5 l/min gehalten wird.

4. Vorrichtung nach Anspruch 1, **dadurch gekennzeichnet**, dass die Lichtquelle (5) Sonnenlicht oder eine Halogenlampe oder eine andere Strahungsquelle mit einem definierten Strahlungsspektrum ist.

5. Vorrichtung nach Anspruch 1, dadurch gekennzeichnet, dass sie als tragbare Einheit ausgeführt ist.

6. Vorrichtung nach Anspruch 1, **dadurch gekennzeichnet**,, dass das photoempfindliche Material aus einer mikroporösen Oberfläche mit kinetisch, thermisch oder chemisch aufgetragenen Chromophorteilchen besteht.

7. Vorrichtung nach Anspruch 6, **dadurch gekennzeichnet**, dass die mikroporöse Oberfläche aus einem keramischen Material oder aus Metall besteht.

8. Vorrichtung nach Anspruch 1, **dadurch gekennzeichnet**, dass die Zeile durch einen Hohlraum in der unteren Platte (1) gebildet wird.

## Revendications

1. Dispositif pour délivrer un courant de gaz oxygéné activé en oxygène singulet, lequel dispositif comprend un matériau photosensible (6) prévu dans une chambre d'activation (3) comprenant une admission de gaz (7) et une évacuation de gaz (8) pour la formation d'oxygène singulet dans le gaz pendant qu'il est situé dans la chambre (3), caractérisé en ce que la chambre d'activation (3) est conçue sous la forme d'un compartiment entre deux plaques (1, 4) dont l'une (4) laisse pénétrer la lumière, tandis qu'un matériau photosensible est appliqué sur l'autre plaque (1) dans la surface inférieure du compartiment en tant que matériau photosensible (6), le compartiment étant isolé de l'environnement extérieur à l'aide d'une bague d'étanchéité (2) intercalée entre les plaques (1, 4).

2. Dispositif selon la revendication 1, caractérisé en ce que la chambre possède une hauteur qui est réduite par rapport à la surface du matériau photosensible (6), en particulier comprise entre 1 et 30 mm, de préférence entre 1 et 3 mm.

3. Dispositif selon la revendication 2, caractérisé en ce que l'écoulement de gaz au niveau d'une hauteur de chambre (3) comprise entre 1 et 6 mm est conservé à un débit de 3 à 5 l/min.

4. Dispositif selon la revendication 1, caractérisé en ce que la source de lumière (5) est la lumière naturelle ou une lampe halogène ou une autre source de rayonnement avec un spectre de rayonnement défini.

5. Dispositif selon la revendication 1, caractérisé en ce qu'il est conçu comme une unité portative.

6. Dispositif selon la revendication 1, caractérisé en ce que le matériau photosensible est constitué d'une surface microporeuse sur laquelle sont appliquées des particules chromophores de manière cinétique, thermique ou chimique.

7. Dispositif selon la revendication 6, caractérisé en ce que la surface microporeuse est faite dans une matière céramique ou en métal.

8. Dispositif selon la revendication 1, caractérisé en ce que le compartiment est constitué d'une cavité dans la plaque inférieure (1).
